# EUROPÄISCHE PATENTSCHRIFT

(11) **EP 3 546 763 B1**
(45) Veröffentlichungstag und Bekanntmachung des Hinweises auf die Patenterteilung: **23.12.2020**
(21) Anmeldenummer: 18163917.0
(22) Anmeldetag: 26.03.2018
(51) Int. Cl.: F15B 19/00

(54) **ERFASSUNG VON WARTUNGSZUSTÄNDEN VON VENTILEN**
DETECTION OF MAINTENANCE CONDITIONS OF VALVES
DÉTECTION DES ÉTATS DE MAINTENANCE DE VANNES

(43) Veröffentlichungstag der Anmeldung: 02.10.2019
(73) Patentinhaber: Siemens Aktiengesellschaft, 80333 München (DE)
(72) Erfinder: Huck, Ralf, 63538 Großkrotzenburg (DE)

(56) Entgegenhaltungen:
- EP-A2- 2 202 598
- WO-A1-03/091614
- US-A1- 2006 273 776
- US-A1- 2008 121 290
- US-A1- 2010 152 907
- US-A1- 2014 190 263
- US-A1- 2015 032 270

## Beschreibung

Erfassung von Wartungszuständen von Ventilen Die Erfindung betrifft ein Ventilsystem nach Anspruch 1. Außerdem betrifft die Erfindung ein Verfahren zur Erfassung eines Wartungszustandes eines in einer industriellen Anlage enthaltenen Ventils nach Anspruch 10.

Ventile werden in der Prozessindustrie zum Beispiel mit Hilfe pneumatischer Antriebe und pneumatischer Hilfsenergie geöffnet. Dabei sorgen Federpakete im Antrieb dafür, dass das Ventil bei einem Ausfall der pneumatischen Hilfsenergie geschlossen wird. Bricht jedoch einer der Federn, kann das Ventil im Fehlerfall nicht mehr sicher geschlossen werden. Die Bereiche vor und hinter dem Ventil können so nicht mehr zuverlässig voneinander getrennt werden, was ernste Konsequenzen mit sich führen kann.

Da Ventile überwiegend zum temporären Absperren/Öffnen eingesetzt werden, befinden sie sich über verhältnismäßig lange Zeiträume hinweg in einem geöffneten / geschlossenen Zustand, um dann nur bei Bedarf mittels eines Antriebs und pneumatischer Hilfsenergie geschlossen/geöffnet zu werden. Durch das lange Verbleiben von Ventil und Antrieb in ihrer Endlage neigt die Kombination aus Ventil und Antrieb regelmäßig dazu, in einer Endlage festzusitzen.

Während des Schließens müssen Ventil und Antrieb beispielsweise aus einer Startlage durch Überwindung eines Losbrechmoments gelöst werden, bevor es durch weitere Druckabsenkung und mittels der Federkraft der Federpakete in eine Geschlossenposition geführt wird. Im Verlauf eines Lebenszyklus des Ventils steigt das Losbrechmoment, bedingt durch Verschleiß und Korrosion des Antriebs, an. Ist das Losbrechmoment größer als die Federkraft des Federpakets, so kann das Ventil trotz Druckabsenkung nicht mehr geschlossen werden. Der Absperrvorgang kann dabei nicht mehr sicher ausgeführt werden, wodurch große Schäden entstehen können. Während des Öffnens treten sinngemäß die gleichen Phänomene auf, wobei das Losbrechmoment insbesondere bei metallisch dichtenden Ventilen, bedeutend größer sein kann, so dass der maximale Druck der pneumatischen Hilfsenergie bei gegebener Membranfläche im Antrieb nicht mehr ausreicht das Ventil zu öffnen, was ebenfalls zu erheblichen Schäden führen kann.

Ein weiteres Schadensbild ergibt sich durch eine Leckage in dem Körper des Ventils. Hierdurch können gegebenenfalls chemisch aggressive bzw. hochreaktive Medien austreten, die Schäden verursachen können.

Zudem kann der Slip Stick Effekt (ein Ruckeln) bei einem Ventil auftreten. Dieser Effekt stellt den Beginn einer einsetzenden Unbeweglichkeit des Antriebs dar.

Die pneumatische Hilfsenergie wird in der Regel über an dem Antrieb montierte Magnetventile geschaltet. Die Magnetventile wiederum werden typischerweise mittels 24V-Digitalausgängen zentraler Steuerungen oder Prozessleitsystem geschaltet. Abgesehen von gegebenenfalls vorhandenen mechanischen Endlagenmeldern sind bisher keine Diagnosevorrichtungen an Ventilen vorhanden.

Die zuvor erläuterten Schadensbilder bei in der Prozessindustrie typischerweise verwendeten Ventilen können daher nicht oder nur mit verhältnismäßig hohem Aufwand detektiert werden. Ein sicherer Betrieb von Ventilen, insbesondere On-Off-Ventilen, ist daher bislang nur mittels regelmäßiger Überprüfung und Wartung oder mittels redundanter Installationen (ein oder mehrere redundante Ventile) oder mittels Überdimensionierung einzelner Elemente der Ventile, beispielsweise durch Verwendung kräftigerer Federn, möglich gewesen.

In Ermangelung geeigneter Diagnoseinstrumente werden die Ventile beispielsweise alle fünf Jahre zu Wartungszwecken demontiert, was vergleichsweise hohe Kosten verursacht. Zudem stellt sich oft heraus, dass ein deutlich längeres Wartungsintervall ausreichend gewesen wäre.

Um die Ventile gängig zu halten und einem Anstieg des Losbrechmoments entgegenzuwirken, können diese regelmäßig kurz geöffnet/geschlossen werden (partial stroke oder full stroke Test). Um dies automatisiert durchzuführen, können sogenannte Stellungsregler eingesetzt werden. Deren Einsatz erfordert eine im Vergleich zu Magnetventilen deutliche komplexere Stellungsreglung sowie eine aufwändigere Ansteuerungstechnik. Auch sind im Falle einer Nachrüstung hohe Umbauaufwendungen vonnöten. Dies führt dazu, dass diese Technik praktisch keine Verwendung findet.

Ein Beispiel für eine solche Überwachung ist aus der DE 10 2015 118 198 A1 bekannt. Hierin ist eine Überwachungseinheit für ein Stellgerät offenbart, die ein Stellventil, einen das Stellventil betätigenden pneumatischen Antrieb und einen den Stellantrieb ansteuernden Stellungsregler umfasst.

Aus der WO 99/21066 A1 ist ein Stellungsregler für ein Stellgerät eines Ventils bekannt, der eine Diagnoseeinheit aufweist.

Des Weiteren offenbart die DE 10 2005 024 686 A1 ein Stellgerät zum Betätigen eines Ventils mit einem pneumatischen Antrieb und einer Diagnosefunktion.

In der US 2010152907 A1 ist eine Druckerfassungseinheit für ein Ventilsystem beschrieben.

Die US 2015/032270 A1 offenbart Systeme und Verfahren zur Diagnose von Komponenten eines Steuerungssystems der Prozessindustrie.

In der US 2014/0190263 A1 sind ein Verfahren und eine dazugehörige Vorrichtung zur Kalibrierung eines Ventils beschrieben.

Die WO 2003/091614 A1 offenbart ein Diagnosesystem und ein dazugehöriges Verfahren für ein Ventil.

Zudem ist die Möglichkeit bekannt, zusätzliche Sensorik/Aktorik einzusetzen, die mittels Feldbussen miteinander und mit dem Leitsystem einer Prozessanlage verbunden ist. Dies erfordert jedoch einen hohen Aufwand an zusätzlichem Material, das für die eigentliche Prozessautomatisierung nicht benötigt werden würde. Zusätzliche, lokale Informationen über einen Zustand der Ventile sind daher nur mit einem hohen Mehraufwand zu erhalten.

Der Erfindung liegt die Aufgabe zugrunde, ein Diagnosesystem zur Erfassung sicherheitsrelevanter Daten eines Ventils in einer industriellen Anlage, insbesondere Fertigungs- oder Produktionsanlage, anzugeben, das mit vergleichsweise geringem Material- und Kostenaufwand an in der Anlage bereits montierten Ventilen angeordnet werden kann und eine bedarfsgesteuerte Wartung der Ventile ermöglicht.

Diese Aufgabe wird gelöst durch ein Ventilsystem, umfassend ein Ventil, das mittels eines pneumatischen Antriebs betrieben wird und das Teil einer industriellen Anlage, insbesondere Fertigungs- oder Produktionsanlage, ist, nach Anspruch 1, und durch ein Verfahren zur Erfassung eines Wartungszustandes eines in einer industriellen Anlage enthaltenen Ventils, das mittels eines pneumatischen Antriebs betrieben wird, nach Anspruch 10. Vorteilhafte Weiterbildungen ergeben sich aus den abhängigen Ansprüchen.

Bei einem Ventilsystem der eingangs beschriebenen Art wird die Aufgabe dadurch gelöst, dass das Ventilsystem ein Diagnosesystem zur Erfassung sicherheitsrelevanter Daten des Ventils aufweist, wobei das Diagnosesystem wenigstens eine Druckerfassungseinheit zur Erfassung von Daten eines Druckverlaufs in dem pneumatischen Antrieb des Ventils, und vorzugsweise zusätzlich wenigstens eine Schallerfassungseinheit zur Erfassung eines Schallverlaufs, in dem Ventilsystem aufweist.

Das erfindungsgemäße Ventilsystem weist demnach eine Druckerfassungseinheit, beispielsweise ein Kompressionsmodul, auf, das dazu ausgebildet ist, unmittelbar oder mittelbar Druckverhältnisse in dem pneumatischen Antrieb des Ventils zu ermitteln.

Der aufgezeichnete (zeitliche) Verlauf von Druckverhältnissen in dem Antrieb lässt Rückschlüsse auf einen Wartungszustand des Ventils bzw. des Ventilantriebs zu, worauf im weiteren Verlauf noch genauer eingegangen wird. Das erfindungsgemäße Ventilsystem lässt sich zudem auf einfache Art und Weise durch Aufrüstung eines herkömmlichen Ventils, das mit einem pneumatischen Antrieb betrieben wird, mit dem zuvor erläuterten Diagnosesystem herstellen.

Zusätzlich zu der Druckerfassungseinheit kann das Ventilsystem eine Schallerfassungseinheit zur Erfassung eines Schallverlaufs in dem Ventilsystem aufweisen.

Das Ventilsystem umfasst ein Vorsteuerventil, vorzugsweise ein Magnetventil, welches zur Steuerung des pneumatischen Antriebs ausgebildet und vorgesehen ist. Mittels dieses Vorsteuerventils lässt sich der pneumatische Antriebe besonders einfach steuern.

Das Diagnosesystem weist eine elektrische Verbindung zu einem das Ventil versorgenden elektrischen Versorgungsnetz auf, um insbesondere die Druckerfassungseinheit mit Energie zu versorgen. Ein großer Vorteil dieser Art der Energieversorgung insbesondere der Druckerfassungseinheit besteht darin, dass keine zusätzlichen, elektrischen Versorgungsleitungen oder Netzwerkinstallationen in der industriellen Anlage angebracht werden müssen, da das Diagnosesystem die bereits vorhandene Infrastruktur des Ventils nutzt. In der Regel wird der pneumatische Antrieb des Ventils mittels eines Magnetventils gesteuert, welches wiederum mittels einer Spannungsversorgung in Höhe von 24 Volt betrieben wird.

Der technische Aufwand zur Umrüstung eines normalen Ventils in ein erfindungsgemäßes Ventilsystem wird durch die zuvor erläuterte Weiterbildung des Ventilsystems weiter vereinfacht.

Das Diagnosesystem weist eine Messeinheit zur Erkennung von Änderungen in dem elektrischen Versorgungsnetz des Ventils auf, um einen Startpunkt eines Schließvorgangs oder eines Öffnungsvorgangs des Ventils zu erkennen. Vorteilhaft ist hierbei, dass das Diagnosesystem die Erfassung des Druckverlaufs in dem Antrieb, und vorzugsweise zusätzlich eine Erfassung des Schallverlaufs in dem Ventilsystem, gezielt unmittelbar nach Einleitung eines Schließ- oder Öffnungsvorgangs des Ventils beginnen kann. Hierdurch lassen sich Ressourcen sparen und übermäßig große Datenmengen vermeiden. Änderungen in dem elektrischen Versorgungsnetz können beispielsweise darin bestehen, dass ein Digital Output (DO) einer separaten Steuereinheit zur Steuerung des Ventils eine Versorgungsspannung des Ventils von einer logischen Eins zu einer logischen Null oder umgekehrt wechselt.

Bevorzugt ist das Diagnosesystem in einem Bereich des Ventils angeordnet. Durch die Anordnung der Druckerfassungseinheit an dem Ventil, d.h. in unmittelbarer Umgebung des Ventils, lässt sich auf einfacher Art und Weise ein Druckverlauf in dem Antrieb bei Schließ- oder Öffnungsvorgängen des Ventils messtechnisch erfassen.

Bei einer besonders vorteilhaften Weiterbildung des erfindungsgemäßen Ventilsystems weist das Diagnosesystem eine Puffereinheit zum Puffern von für die Druckerfassungseinheit (und ggf. für die Schallerfassungseinheit) benötigter Versorgungsenergie auf. Für den Fall, dass die externe elektrische Energieversorgung des Ventils ausfällt bzw. planmäßig im Falle einer logischen Null auf ein niedriges Spannungslevel wechselt, wird durch die Puffereinheit, beispielsweise einem elektrischen Energiespeicher, gewährleistet, dass die Druckerfassungseinheit ordnungsgemäß den Verlauf der Druckverhältnisse in dem Antrieb des Ventils (und ggf. die Schallerfassungseinheit einen Körper- oder Luftschall in dem Ventilsystem) erfassen kann.

Bei einer bevorzugten Weiterbildung des Ventilsystems weist das Diagnosesystem eine autarke Energiequelle zur Versorgung der Druckerfassungseinheit, insbesondere eine Batterie oder Photovoltaikeinheit, auf. Die autarke Energiequelle kann dabei zusätzlich zu einer zuvor bereits erläuterten elektrischen Verbindung des Diagnosesystems zu einem das Ventil versorgenden elektrischen Versorgungsnetz vorhanden sein. Es ist aber mittels der autarken Energiequelle auch möglich, komplett auf einen Eingriff in das bestehende elektrische Versorgungsnetz des Ventils zu verzichten. Speziell hinsichtlich einer SIL-Zulassung (Safety Integrity Level) der industriellen Anlage bzw. des Ventilsystems kann die autarke Energieversorgung von großer Bedeutung sein, da ein Eingriff in das bestehende elektrische Versorgungsnetz des Ventils unter Umständen das erzielte SIL-Level senken kann. Zudem lässt sich eine autarke Energiequelle vergleichsweise einfach im Rahmen des Ventilsystems an oder in unmittelbarer Umgebung des Ventils anbringen.

Vorteilhafterweise weist das Diagnosesystem, insbesondere im Falle des Vorhandenseins einer autarken Energieversorgung, eine Einheit zum akustischen Erfassen eines Startpunktes eines Schließvorgangs oder eines Öffnungsvorgangs des Ventils auf, insbesondere mittels einer Erfassung eines Körperschalls oder eines Luftschalls in dem Ventil. In dem Falle, dass keine Verbindung zu dem elektrischen Versorgungsnetz des Ventils besteht, lässt sich ein Startzeitpunkt eines Öffnungs- oder Schließvorgangs des Ventils nicht mehr mittels einer Erfassung von Änderungen der elektrischen Energieversorgung erkennen. Eine alternative Lösung bietet für diesen Fall die Verwendung einer Einheit zum akustischen Erfassen des Startpunktes eines Öffnungs- oder Schließvorgangs des Ventils oder des Vorsteuerventils. Beispielsweise mittels einer Körper- oder Luftschallmessung in dem Ventil kann der Startpunkt mit vergleichbarer Genauigkeit erkannt werden.

Vorteilhafterweise weist das Diagnosesystem hierzu einen Schallsensor zur Erfassung eines Körperschalls oder Luftschalls in dem Ventil auf. Der Schallsensor kann nicht nur zur Detektion des Startpunktes eines Öffnungs- oder Schließvorgangs verwendet werden, sondern auch zur Erfassung einer Leckage in dem Ventil, beispielsweise einer Dichtheit beim Schließen und/oder nach außen hin. Hierzu können charakteristische Geräusche erfasst und bewertet werden, die im Falle von Leckagen typischerweise auftreten. Zusätzlich erlaubt eine Betrachtung eines Frequenzspektrums eines kompletten Öffnungs- oder Schließvorgangs des Ventils über eine längere Zeit hinweg Rückschlüsse über den Wartungszustand des Ventils. Bei einer vorteilhaften Weiterbildung des Ventilsystems weist das Diagnosesystem eine Speichereinheit zum Speichern der Daten des Druckverlaufs oder eines Schallverlaufs in dem pneumatischen Antrieb auf. Dabei ist die Speichereinheit vorzugsweise zur Speicherung der Daten ohne Energieversorgung ausgebildet, um einem Datenverlust bei einem Ausfall der Energieversorgung vorzubeugen. Durch die Puffer- oder Speichereinheit ist es auch möglich, die gewonnenen Daten längere Zeit in dem Diagnosesystem zu speichern, um sie zeitversetzt weiterzuverarbeiten und/oder weiterzuleiten.

Das Diagnosesystem weist vorteilhafterweise zusätzlich eine Ausgabeeinheit zum zeitversetzten Ausgeben der Daten auf, insbesondere mittels einer drahtgebundenen oder drahtlosen Kommunikationseinheit. Bei der Ausgabeeinheit kann es sich beispielsweise um eine serielle Schnittstelle, ein Bluetooth®-Modul, eine WI-FI® Schnittstelle oder einen GPS-Sender (Global Positioning System). Die Ausgabeeinheit ist dabei zur Weiterleitung entweder unverarbeiteter Rohdaten oder bereits ausgewerteter Daten ausgebildet und vorgesehen.

Besonders bevorzugt weist das Ventilsystem einen Wegsensor zur Erfassung einer Stellung des pneumatischen Antriebs des Ventils auf. Die Erfassung eines von dem Antrieb zurückgelegten Weges bzw. dessen exakter Position in dem Ventil kann die Diagnose des Wartungszustandes des Ventils noch exakter vorgenommen werden.

Die eingangs erwähnte Aufgabe wird zudem durch ein Verfahren zur Erfassung eines Wartungszustandes eines in einer industriellen Anlage enthaltenen Ventils, das mittels eines pneumatischen Antriebs betrieben wird, nach Anspruch 10 gelöst. Das Verfahren zeichnet sich dadurch aus, dass das Diagnosesystem dazu verwendet wird, einen Druckverlauf eines pneumatischen Antriebs eines Ventils (und vorzugsweise zusätzlich einen Schallverlauf in dem Ventilsystem) bei einem Schließvorgang oder einem Öffnungsvorgang des Ventils zu erfassen.

Der Ausdruck "Druckverlauf des pneumatischen Antriebs" kann dabei bedeuten, dass der Druck direkt in einer Druckkammer des Antriebs gemessen wird. Es liegt aber gleichfalls in der Bedeutung des Ausdrucks, dass der Druck in der Druckluftleitung gemessen wird. Mit anderen Worten bedeutet dies, dass ein Druckwert bereits vor dem Einströmen der Luft in die Druckkammer des pneumatischen Antriebs erfasst wird.

Vorteilhafterweise wird das Diagnosesystem zusätzlich dazu verwendet, eine Wegerfassung des pneumatischen Antriebs des Ventils (und ggf. eine Erfassung eines Körperschalls oder Luftschalls in dem Ventil) vorzunehmen.

Bei einer besonders vorteilhaften Weiterbildung des erfindungsgemäßen Verfahrens werden eine Steigungsänderung des Druckverlaufs des pneumatischen Antriebs und/oder eine Stellung des pneumatischen Antriebes und/oder eine Frequenzcharakteristik des Körperschalls oder Luftschalls in dem Ventil ausgewertet, um für das Ventil kritische Kenngrößen zu bewerten. Insbesondere kann mittels des erfindungsgemäßen Diagnosesystems anhand einer Auswertung der Steigungsänderung des Druckverlaufs in dem Antrieb ermittelt werden, wie hoch ein Losbrechmoment oder eine Schließkraft des Antriebs ist und wie stark ein etwaiges Ruckeln während eines Schließvorgangs des Ventils auftritt. Zudem kann eine Hysterese eines Full Stroke Vorgangs (Öffnen und sofortiges Schließen) bestimmt werden.

Die Steigungsänderung ergibt sich dabei dadurch, dass Rohrleitungen zum Belüften des pneumatischen Antriebs eine Art Drossel darstellen. Bei einem Losbrechen des Ventils bzw. des Antriebs verschiebt sich eine in dem Antrieb angeordnete Membran schlagartig und vergrößert dadurch ein in dem Antrieb enthaltenes Volumen. Luft kann dabei über die Drossel nicht schnell genug in das Volumen nachströmen, so dass sich ein Druck in dem Antrieb schnell verringert. Wird diese Änderung in der Steigung des Druckverlaufs in dem Antrieb über längere Zeit, d.h. eine Vielzahl von Öffnungs- und Schließvorgängen des Ventils, so können Rückschlüsse auf einen Wartungszustand des Ventils geschlossen werden.

Durch eine Extrapolation der Druckverlaufskurve kann zudem vorhergesagt werden, wann ungefähr mit einem Ausfall des Ventils zu rechnen ist, beispielsweise wenn das Losbrechmoment des Ventils/Antriebs größer als die Federkraft des Federpakets des Antriebes ist.

Die Auswertung von mittels des Diagnosesystems erfassten Daten kann entweder direkt in dem Diagnosesystem vor Ort oder in einer nachgelagerten Auswerteeinheit, beispielsweise einem Mikroprozessor oder einer Cloudumgebung, erfolgen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird. Es zeigen:
- FIG 1: ein Ventilsystem nach dem Stand der Technik in einem Blockschaltbild;
- FIG 2: ein erfindungsgemäßes Ventilsystem mit einem Diagnosesystem zur Erfassung sicherheitsrelevanter Daten des Ventils in einem Blockschaltbild;
- FIG 3: eine erste Variante eines erfindungsgemäßen Diagnosesystem zur Erfassung sicherheitsrelevanter Daten des Ventils in einem Blockschaltbild;
- FIG 4: eine zweite Variante eines erfindungsgemäßen Diagnosesystem zur Erfassung sicherheitsrelevanter Daten des Ventils in einem Blockschaltbild;
- FIG 5: ein beispielhafter zeitlicher Druckverlauf in einem pneumatischen Antrieb während eines Öffnungsoder Schließvorgangs des dazugehörigen Ventils; und
- FIG 6: eine dritte Variante eines erfindungsgemäßen Diagnosesystem zur Erfassung sicherheitsrelevanter Daten des Ventils in einem Blockschaltbild.

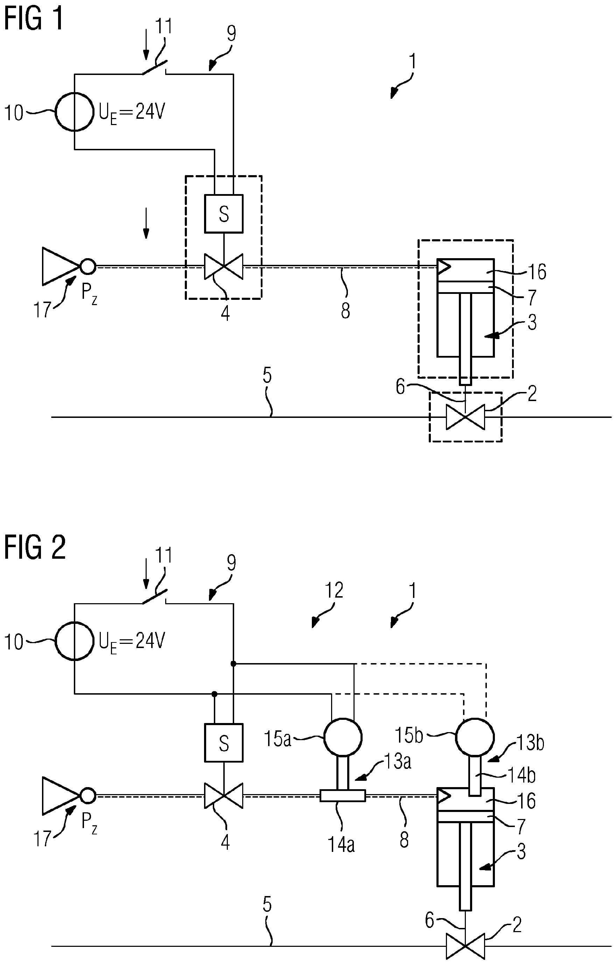

In FIG 1 ist ein Ventilsystem 1 gemäß dem Stand der Technik dargestellt. Das Ventilsystem 1 umfasst ein Prozessventil 2, einen pneumatischen Antrieb 3 und ein Vorsteuerventil 4.

Ein durch eine Prozessleitung 5 strömendes Medium wird durch das Prozessventil 2 gesteuert. Bei dem Prozessventil 2 handelt es sich um ein Auf-Zu Ventil (On-Off-Ventil), das zwischen den zwei Zuständen "Ventil offen" und "Ventil geschlossen" geschaltet werden kann.

Die Schaltung des Prozessventils 2 erfolgt mittels des pneumatischen Antriebs 3. In bekannter Weise wird in dem pneumatischen Antrieb 3 eine mit einer Ventilspindel 6 des Prozessventils 2 gekoppelte Membran 7 mittels durch eine Druckluftleitung 8 zugeführter Druckluft bewegt. In FIG 1 ist der pneumatische Antrieb 3 stellvertretend für die gängigen, bekannten Ausführungsformen ohne rückstellende Federn dargestellt. Das Prozessventil 2 kann alle bekannten Konfigurationen aufweisen, wie beispielsweise "normally open" oder "normally closed", "einfachwirkend" oder doppelwirkend" etc.

Das Vorsteuerventil 4 wird mittels eines elektrischen Versorgungsnetzes 9 mit elektrischer Energie versorgt. Das elektrische Versorgungsnetz besteht in einer vereinfachten Darstellung aus einer Spannungsquelle 10, die eine Gleichspannung in Höhe von 24 V bereitstellt, und einem Taster 11, um einen Spannungskreis zu schließen und das Vorsteuerventil 4 anzusteuern. Der Taster 11 ist dabei als stellvertretend für alle gängigen Ansteuer- /Regelungsmöglichkeiten anzusehen, die beispielsweise im Kontext eines Prozessleitsystems einer industriellen Anlage zur Verfügung stehen.

Das Vorsteuerventil 4 steuert (oder regelt) den Durchfluss von Druckluft, die aus einer Druckluftquelle 17 über die Druckluftleitung 8 in den pneumatischen Antrieb 3 strömt.

Mit dem bislang bekannten Ventilsystem 1 ist keine Diagnose eines Zustandes des pneumatischen Antriebs 3 und des Prozessventils 2 möglich. Eine solche Möglichkeit wird erst durch die im Folgenden beschriebenen Ausführungsformen erfindungsgemäßer Ventilsysteme 1 ermöglicht.

FIG 2 zeigt ein Ventilsystem 1, das einen identischen Grundaufbau hat wie das zuvor erläuterte Ventilsystem 1 (FIG 1). Allerdings zeichnet sich das in FIG 2 dargestellte Ventilsystem 2 dadurch aus, dass es ein zusätzliches Diagnosesystem 12 aufweist. Das Diagnosesystem 12 umfasst in diesem Ausführungsbeispiel nur eine Druckerfassungseinheit 13a. Die Druckerfassungseinheit 13a wiederum umfasst einen Drucksensor 14a und einen Datenlogger 15a. Der Drucksensor 14a ist gemäß einer ersten Ausführungsvariante in der Druckluftleitung 8 angeordnet bzw. er ist ein Bestandteil der Druckluftleitung 8, so dass die Druckluft vor dem Einströmen in den pneumatischen Antrieb 3 durch den Drucksensor 14a strömt, welcher einen Druckwert in der Druckluftleitung 8 ermittelt und an den Datenlogger 15a weiterleitet. Der Vorteil bei dieser Variante der Druckerfassungseinheit 13a liegt darin, dass das Diagnosesystem 12 auf einfache Art und Weise nachträglich in eine bestehendes Ventilsystem 1 integriert werden kann, ohne in das Innere des pneumatischen Antriebs 3 eingreifen zu müssen.

Gemäß einer zweiten Ausführungsvariante (Verbindungslinien zu dem elektrischen Versorgungsnetz 9 sind gestrichelt dargestellt) ist ein Drucksensor 14b einer Druckerfassungseinheit 13b in einer Druckkammer 16 des pneumatischen Antriebs 3 angeordnet. Der dazugehörige Datenlogger 15b ist außerhalb des pneumatischen Antriebs 3 angeordnet. Der Vorteil bei dieser Ausführungsvariante ist, dass die Messung des Druckwertes direkt in dem pneumatischen Antrieb 3 erfolgen kann.

Bei beiden Ausführungsvarianten sind die Datenlogger 15a, 15b jeweils in einer Parallelschaltung zu dem Vorsteuerventil 4 an das elektrische Versorgungsnetz 9 angeschlossen. Damit kann die Versorgung der Datenlogger 15a, 15b bzw. der damit verbundenen Drucksensoren 14a, 14b gewährleistet werden.

Das Diagnosesystem 12 ist dazu ausgebildet, einen Druckverlauf des pneumatischen Antriebs 3 bei einem Schließvorgang oder einem Öffnungsvorgang des Prozessventils 2 zu erfassen. Der Ausdruck "Druckverlauf des pneumatischen Antriebs 3" kann dabei bedeuten, dass der Druck direkt in einer Druckkammer 16 des Antriebs 3 gemessen wird. Es liegt aber gleichfalls in der Bedeutung des Ausdrucks, dass der Druck in der Druckluftleitung 8 gemessen wird. Mit anderen Worten bedeutet dies, dass ein Druckwert bereits vor dem Einströmen der Luft in die Druckkammer 16 des pneumatischen Antriebs 3 erfasst wird.

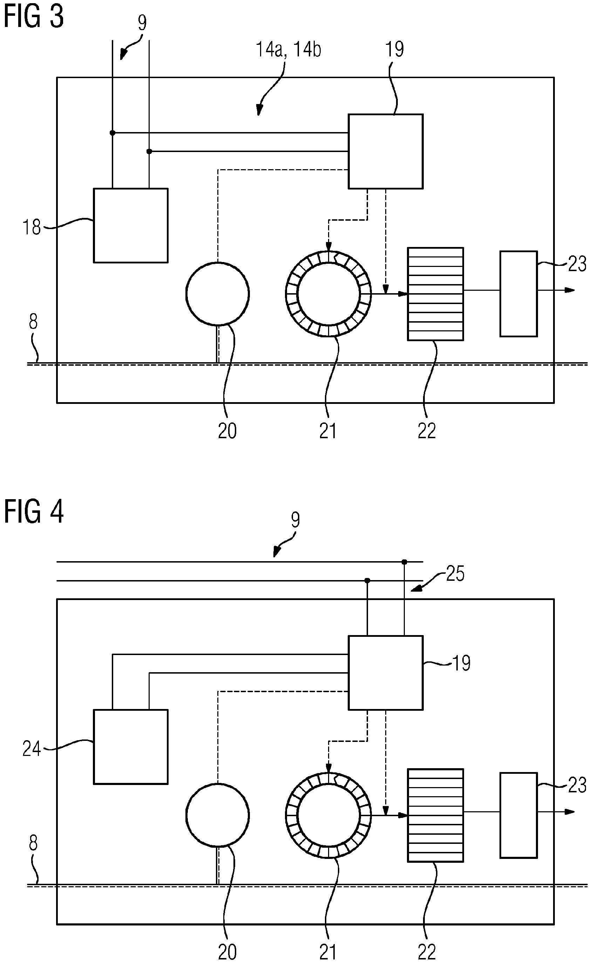

In FIG 3 ist eine Ausführungsform eines Datenloggers 15a, 15b dargestellt. Wird beispielsweise ein Schließvorgang des Prozessventils 2 überwacht und sinkt ein Spannungsniveau des mittels des elektrischen Versorgungsnetzes 9 betriebenen Vorsteuerventils 4 auf einen Wert von 0V, fällt die (externe) Versorgung des Datenloggers 15a, 15b bzw. der gesamten Druckerfassungseinheit 13a, 13b weg. Um aber den kompletten Schließvorgang des Prozessventils 2 protokollieren und überwachen zu können, verfügt der Datenlogger 15a, 15b über einen Energiespeicher 18 als Puffereinheit zum Speichern von elektrischer Energie. Bei diesem Energiespeicher 18 kann es sich beispielsweise um einen Kondensator oder einen Batteriespeicher handeln.

Der Datenlogger 14a, 14b umfasst weiterhin eine zentrale Recheneinheit 19, eine Kommunikationseinheit 20 zur Kommunikation mit dem Drucksensor 14a, 14b, einen Ringspeicher 21, einen Datenspeicher 22 und eine Schnittstelle 23 zum Auslesen des Datenspeichers 22 auf.

Solange das Vorsteuerventil 4 mittels des elektrischen Versorgungsnetzes 9 mit elektrischer Energie versorgt wird (der Stromkreislauf also geschlossen ist), erfasst der Datenlogger 15a, 15b kontinuierlich oder in bestimmten Abständen die Druckwerte, die der Drucksensor 14a, 14b ermittelt. Diese Werte schreibt die zentrale Recheneinheit 19, die vorzugsweise als Mikrocontroller ausgebildet ist, in den Ringspeicher 21. Unter einem Ringspeicher 21 wird dabei ein digitaler Speicher verstanden, der Daten kontinuierlich über einen gewissen Zeitraum speichert und nach dem Ablauf einer gewissen Zeit wieder überschreibt, um den Speicherplatz für neue Daten wieder freizugeben.

Wird das Vorsteuerventil 4 geschlossen, d.h. die elektrische Energieversorgung 9 wird unterbrochen, so detektiert dies die zentrale Recheneinheit 19 (Triggerzeitpunkt) und legt eine gewisse Anzahl an in dem Ringspeicher 21 gespeicherten Messdaten (d.h. Druckwertdaten) vor dem Triggerzeitpunkt und eine gewisse Anzahl an nach dem Triggerzeitpunkt ermittelten Messdaten in den Datenspeicher 22. Die in dem Datenspeicher 22 hinterlegten Druckwertdaten können mittels der Schnittstelle 23 ausgelesen werden. Die Detektion kann durch die zentrale Recheneinheit 19 mittels geeigneter elektrischer Sensoren (z.B. Hallsonde) oder mittels akustischer Erfassung eines Schließvorgangs (oder Öffnungsvorgangs) des Prozessventils oder Vorsteuerventils. 2. Hintergrund hierfür ist, dass sich Änderungen im Zustand des Prozessventils 2 oder Vorsteuerventils akustisch wahrnehmen lassen.

Vor dem Auslesen der Messdaten über die Schnittstelle 23 kann eine Auswertung der Messdaten durch die zentrale Recheneinheit 19 erfolgen. Es können aber auch unbearbeitete Rohdaten ausgelesen werden und extern weiterverarbeitet werden, insbesondere in einer Cloudumgebung.

In FIG 4 ist eine Ausführungsform des Diagnosesystems 12 offenbart, die eine autarke Energieversorgung 24 aufweist. Die autarke Energieversorgung kann beispielsweise ein leistungsfähiger Batteriespeicher sein. Es ist aber auch möglich, eine photovoltaisch wirkende Einheit (Solarzelle) oder dergleichen zu verwenden. Um eine Zustandsänderung in der Energieversorgung des Vorsteuerventils 4 detektieren zu können, umfasst das Diagnosesystem eine Detektionseinheit 25. Diese kann beispielsweise ein Hallsensor sein. Um unnötige Wiederholungen zu vermeiden, sei bezüglich der übrigen Komponenten des Diagnosesystems 12 in FIG 4 auf die Beschreibung der FIG 3 verwiesen.

Bei den in den Figuren 3 und 4 beschriebenen Diagnosesysteme 12 kann der Drucksensor 14a, 14b jeweils in der Kammer 16 des pneumatischen Antriebs 3 oder in der Druckluftleitung 8 angeordnet sein. Zur Erhöhung der Genauigkeit bzw. um eine redundante Erfassung des Druckwerts zu ermöglichen, kann auch ein Drucksensor 14a in der Druckluftleitung 8 und ein Drucksensor 14b in der Kammer 16 des pneumatischen Antriebs 3 angeordnet sein.

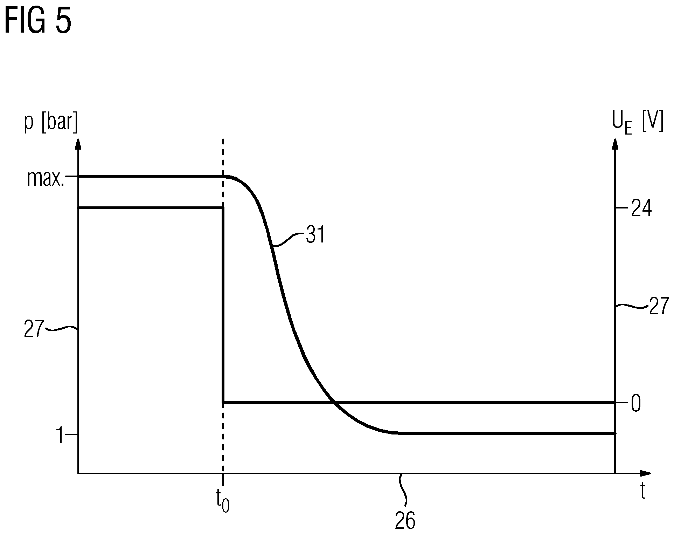

FIG 5 zeigt einen möglichen Signalverlauf 31 des Druckwertes in der Kammer 16 des pneumatischen Antriebs 3 eines sich entlüftenden Antriebs 3 im Vergleich zu einer entsprechenden Steuerspannung für das Vorsteuerventil 4. Der Triggerzeitpunkt ist mit t₀ auf der horizontalen Zeitachse 26 markiert (die Zeitachse 26 ist einheitenlos). Auf der vertikalen Achse 27 sind der Druckwert in bar und die Steuerspannung in Volt dargestellt. Die Messdaten, die die zentrale Recheneinheit 19 dem Ringspeicher 21 vor dem Triggerzeitpunkt t₀ entnimmt, befinden sich in dem Diagramm zeitlich gesehen links von t₀. Die Messdaten, die direkt (ohne Umweg über den Ringspeicher 21, in den Datenspeicher 22 gelegt werden, befinden sich in dem Diagramm zeitlich gesehen rechts von t₀.

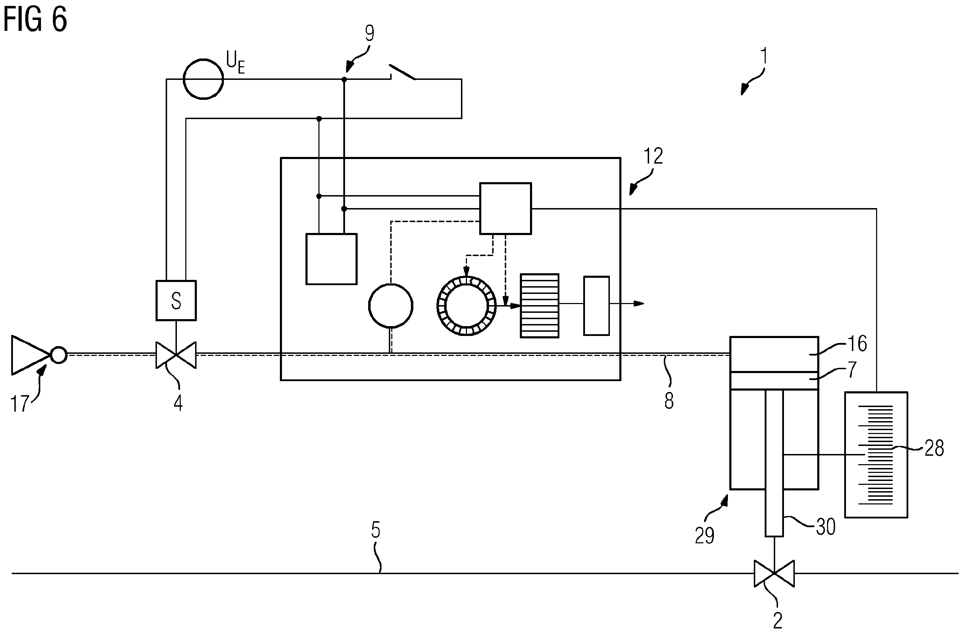

In FIG 6 ist eine weitere Ausführungsform des in der FIG 3 erläuterten Diagnosesystems 12 dargestellt. Das Diagnosesystem 12 umfasst neben der Druckerfassungseinheit 13a, 13b einen Wegsensor 28. Dieser ist dazu ausgebildet, eine Stellung des pneumatischen Antriebs 3 des Prozessventils 2 zu erfassen. Im Fall eines linearen pneumatischen Antriebs 3 ist der Wegsensor 28 zwischen einer Laterne 29 und einem Schaft 30 des Antriebs 3 montiert. Dabei ist die Laterne 29 das Bezugssystem (Referenz) des Wegsensors 28. Der Schaft 30 bewegt sich relativ zu diesem. Die Erfassung des Wegs erfolgt beispielsweise optisch oder mittels eines GMR-Sensors (giant magneto resistance - Riesenmagnetowiderstand). Es können auch Potentiometer oder Hallsensoren in Kombination mit einem an dem Schaft 30 montierten Magneten verwendet werden.

Sowohl eine Kenntnis des Drucks in dem pneumatischen Antrieb 3 wie auch eine Information über einen zurückgelegten Weg des Antriebs 3 ermöglichen Informationen hinsichtlich einer linearen Bewegung des Antriebes und damit indirekte Auskunft darüber, ob das Prozessventil 2 sachgemäß schließt bzw. ob dieses geschlossen ist. Zusätzliche Informationen bezüglich des Zustandes des Prozessventiles 2 lassen sich gewinnen, wenn das Diagnosesystem 12 einen Schallsensor zur Erfassung eines Körperschalls oder Luftschalls in dem Prozessventil 2 aufweist. Dieser kann beispielsweise an der Laterne 29 des Antriebs 3 angeordnet sein. Auch Mikrofone in unmittelbarer Nähe des Prozessventiles 2 können als zusätzliche Datenquelle dienen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die Ansprüche definierten Schutzumfang der Erfindung zu verlassen.

## Patentansprüche

1. Ventilsystem (1), umfassend ein Ventil (2), das mittels eines pneumatischen Antriebs (3) betrieben wird, und das Teil einer industriellen Anlage, insbesondere Fertigungs- oder Produktionsanlage, ist,
wobei das Ventilsystem (1) ein Diagnosesystem (12) zur Erfassung sicherheitsrelevanter Daten des Ventils (2) aufweist,
und wobei das Diagnosesystem (12) wenigstens eine Druckerfassungseinheit (13a, 13b) zur Erfassung von Daten eines Druckverlaufs in dem pneumatischen Antrieb (3) des Ventils (2), und vorzugsweise zusätzlich wenigstens eine Schallerfassungseinheit (15a, 15b) zur Erfassung eines Schallverlaufs in dem Ventilsystem (1), umfasst, und wobei das Ventilsystem (1) ein Vorsteuerventil (4) umfasst, vorzugsweise Magnetventil, welches zur Steuerung des pneumatischen Antriebs (3) ausgebildet und vorgesehen ist,
und wobei das Diagnosesystem (12) eine elektrische Verbindung zu einem das Vorsteuerventil (4) versorgenden elektrischen Versorgungsnetz (9) aufweist, um insbesondere die Druckerfassungseinheit (13a, 13b), und vorzugsweise zusätzlich die Schallerfassungseinheit (15a, 15b), mit elektrischer Energie zu versorgen,
**dadurch gekennzeichnet, dass**
das Diagnosesystem (12) eine Messeinheit (19, 25) zur Erkennung von Änderungen in dem elektrischen Versorgungsnetz (9) des Vorsteuerventils (4) aufweist, um einen Startpunkt eines Schließvorgangs oder eines Öffnungsvorgangs des Ventils (2) zu erkennen.

2. Ventilsystem (1) nach Anspruch 1, bei dem das Diagnosesystem (12) in einem Bereich des Ventils (2) angeordnet ist.

3. Ventilsystem (1) nach einem der vorangegangenen Ansprüche, bei dem das Diagnosesystem (12) eine autarke Energiequelle (24) zur Versorgung der Druckerfassungseinheit (13a, 13b), und vorzugsweise zusätzlich der Schallerfassungseinheit (15a, 15b), aufweist, insbesondere eine Batterie oder Photovoltaikeinheit.

4. Ventilsystem (1) nach einem der vorangegangenen Ansprüche, bei dem das Diagnosesystem (12) eine Einheit zum akustischen Erfassen eines Startpunktes eines Schließvorgangs oder eines Öffnungsvorgangs des Ventils (2) aufweist, insbesondere mittels einer Erfassung eines Körperschalls oder eines Luftschalls in dem Ventilsystem (1).

5. Ventilsystem (1) nach einem der vorangegangenen Ansprüche, bei dem das Diagnosesystem (12) eine Puffereinheit (18) zum Puffern von für die Druckerfassungseinheit (13a, 13b), und vorzugsweise für die Schallerfassungseinheit (15a, 15b), benötigter elektrischer Energie aufweist.

6. Ventilsystem (1) nach einem der vorangegangenen Ansprüche, bei dem das Diagnosesystem (12) eine Speichereinheit (21, 22) zum Speichern der Daten des Druckverlaufs oder Schallverlaufs in dem pneumatischen Antrieb (3) aufweist, wobei die Speichereinheit (21, 22) vorzugsweise zur Speicherung der Daten ohne Energieversorgung ausgebildet ist.

7. Ventilsystem (1) nach Anspruch 6, bei dem das Diagnosesystem (12) eine Ausgabeeinheit (23) zum zeitversetzten Ausgeben der zuvor in der Speichereinheit (21, 22) gespeicherten Daten, insbesondere mittels einer drahtgebundenen oder drahtlosen Kommunikationseinheit, aufweist.

8. Ventilsystem (1) nach einem der vorangegangenen Ansprüche, bei dem das Diagnosesystem (12) einen Wegsensor (28) zur Erfassung einer Stellung des pneumatischen Antriebs (3) des Ventils (2) aufweist.

9. Ventilsystem (1) nach einem der vorangegangenen Ansprüche, bei dem das Diagnosesystem (12) einen Schallsensor zur Erfassung eines Körperschalls oder Luftschalls in dem Ventil (2) aufweist.

10. Verfahren zur Erfassung eines Wartungszustandes eines in einer industriellen Anlage installierten Ventilsystems (1) gemäß Anspruch 1, das mittels eines pneumatischen Antriebs (3) betrieben wird, **dadurch gekennzeichnet, dass** das Diagnosesystem (12) dazu verwendet wird, einen Druckverlauf des pneumatischen Antriebs (3) des Ventils (2), und vorzugsweise zusätzlich einen Schallverlauf in dem Ventilsystems (1), bei einem Schließvorgang oder einem Öffnungsvorgang des Ventils (2) zu erfassen.

11. Verfahren nach Anspruch 10, bei dem das Diagnosesystem (12) dazu verwendet wird, eine Wegerfassung des pneumatischen Antriebs (3) des Ventils (2) vorzunehmen.

12. Verfahren nach Anspruch 10 oder 11, bei dem das Diagnosesystem (12) dazu verwendet wird, eine Erfassung eines Körperschalls oder Luftschalls in dem Ventilsystem (1) vorzunehmen.

13. Verfahren nach einem der Ansprüche 10 bis 12, bei dem eine Steigungsänderung des Druckverlaufs des pneumatischen Antriebs (3) und/oder eine Stellung des pneumatischen Antriebes (3) und/oder eine Frequenzcharakteristik des Körperschalls oder Luftschalls in dem Ventilsystem (1) ausgewertet werden, um für das Ventilsystem (1) kritische Kenngrößen zu bewerten.

14. Verfahren nach einem der Ansprüche 10 bis 13, bei dem der Druckverlauf des pneumatischen Antriebs (3) und/oder eine Stellung des pneumatischen Antriebes (3) und/oder eine Frequenzcharakteristik des Körperschalls oder Luftschalls in dem Ventilsystem (1) zeitlich extrapoliert werden, um Vorhersagen über eine Ausfallwahrscheinlichkeit des Ventilsystems (1) zu treffen.

## Claims

1. Valve system (1) comprising a valve (2), which is operated by a pneumatic actuator (3) and is part of an industrial plant, in particular a manufacturing or production plant, wherein the valve system (1) comprises a diagnostic system (12) for acquiring safety-relevant data about the valve (2), and wherein the diagnostic system (12) comprises at least one pressure detection unit (13a, 13b) for acquiring data on a pressure variation in the pneumatic actuator (3) of the valve (2), and preferably additionally comprises at least one acoustic detection unit (15a, 15b) for detecting an acoustic variation in the valve system (1),
and wherein the valve system (1) comprises a pilot valve (4), preferably a solenoid valve, which is designed and provided for controlling the pneumatic actuator (3),
and wherein the diagnostic system (12) comprises an electrical connection to an electrical power supply network (9) supplying the pilot valve (4), in order to supply electrical power in particular to the pressure detection unit (13a, 13b), and preferably additionally to the acoustic detection unit (15a, 15b),
**characterised in that**
the diagnostic system (12) comprises a measurement unit (19, 25) for identifying changes in the electrical power supply network (9) for the pilot valve (4), in order to identify a starting point of a closing action or of an opening action of the valve (2).

2. Valve system (1) according to claim 1, in which the diagnostic system (12) is arranged in a region of the valve (2) .

3. Valve system (1) according to one of the preceding claims, in which the diagnostic system (12) comprises an autonomous energy source (24), in particular a battery or photovoltaic unit, for supplying the pressure detection unit (13a, 13b), and preferably additionally the acoustic detection unit (15a, 15b) .

4. Valve system (1) according to one of the preceding claims, in which the diagnostic system (12) comprises a unit for acoustically detecting a starting point of a closing action or of an opening action of the valve (2), in particular by detecting structure-borne sound or airborne sound in the valve system (1).

5. Valve system (1) according to one of the preceding claims, in which the diagnostic system (12) comprises a buffer unit (18) for buffering electrical energy needed for the pressure detection unit (13a, 13b), and preferably for the acoustic detection unit (15a, 15b).

6. Valve system (1) according to one of the preceding claims, in which the diagnostic system (12) comprises a memory unit (21, 22) for storing the data on the pressure variation or acoustic variation in the pneumatic actuator (3), wherein the memory unit (21, 22) is preferably designed to store the data without a power supply.

7. Valve system (1) according to claim 6, in which the diagnostic system (12) comprises an output unit (23) for deferred output, in particular by means of a wired or wireless communication unit, of the data previously stored in the memory unit (21, 22).

8. Valve system (1) according to one of the preceding claims, in which the diagnostic system (12) comprises a displacement sensor (28) for detecting a position of the pneumatic actuator (3) of the valve (2).

9. Valve system (1) according to one of the preceding claims, in which the diagnostic system (12) comprises an acoustic sensor for detecting structure-borne or airborne sound in the valve (2).

10. Method for detecting a maintenance status of a valve system (1) according to claim 1, which is installed in an industrial plant and operated by a pneumatic actuator (3),
**characterised in that**
the diagnostic system (12) is used to detect a pressure variation of the pneumatic actuator (3) of the valve (2), and preferably additionally to detect an acoustic variation in the valve system (1), during a closing action or an opening action of the valve (2).

11. Method according to claim 10, in which the diagnostic system (12) is used to detect a displacement of the pneumatic actuator (3) of the valve (2).

12. Method according to claim 10 or claim 11, in which the diagnostic system (12) is used to detect structure-borne or airborne sound in the valve system (1).

13. Method according to one of claims 10 to 12, in which a change in gradient of the pressure variation of the pneumatic actuator (3), and/or a position of the pneumatic actuator (3), and/or a frequency characteristic of the structure-borne or airborne sound in the valve system (1) is analysed in order to evaluate parameters critical to the valve system (1).

14. Method according to one of claims 10 to 13, in which the pressure variation of the pneumatic actuator (3), and/or a position of the pneumatic actuator (3), and/or a frequency characteristic of the structure-borne or airborne sound in the valve system (1) is extrapolated in time in order to predict a likelihood of failure of the valve system (1).

## Revendications

1. Système (1) de vannes, comprenant une vanne (2), qui fonctionne au moyen d'un entraînement (3) pneumatique, et qui est une partie d'une installation industrielle, notamment d'une installation de fabrication ou de production,
dans lequel le système (1) de vannes a un système (12) de diagnostic pour relever des données de la vanne (2), qui sont pertinentes du point de vue de la sécurité,
et dans lequel le système (12) de diagnostic comprend au moins une unité (13a, 13b) de relevé de la pression pour relever des données d'une courbe de pression dans l'entraînement (3) pneumatique de la vanne (2) et, de préférence, en outre, au moins une unité (15a, 15b) de relevé du son pour relever une courbe du son dans le système (1) de vannes,
et dans lequel le système (1) de vannes comprend une vanne (4) pilote, de préférence une électrovanne, qui est constituée et prévue pour la commande de l'entraînement (3) pneumatique,
et dans lequel le système (12) de diagnostic a une liaison électrique avec un réseau (9) d'alimentation électrique alimentant la vanne (4) pilote, pour alimenter notamment en énergie électrique l'unité (13a, 13b) de relevé de la pression et, de préférence, en outre, l'unité (15a, 15b) de relevé du son,
**caractérisé en ce que**
le système (12) de diagnostic a une unité (19, 25) de mesure pour la détection de variations dans le réseau (9) d'alimentation électrique de la vanne (4) pilote, afin de détecter un point de début d'une opération de fermeture ou d'une opération d'ouverture de la vanne (2).

2. Système (1) de vannes suivant la revendication 1, dans lequel le système (12) de diagnostic est disposé dans une région de la vanne (2).

3. Système (1) de vannes suivant l'une des revendications précédentes, dans lequel le système (12) de diagnostic a une source (24) d'énergie autonome pour l'alimentation de l'unité (13a, 13b) de relevé de la pression et, de préférence, en outre, de l'unité (15a, 15b) de détection du son, notamment une batterie ou une unité photovoltaïque.

4. Système (1) de vannes suivant l'une des revendications précédentes, dans lequel le système (12) de diagnostic a une unité pour la détection acoustique d'un point de début d'une opération de fermeture ou d'une opération d'ouverture de la vanne (2), notamment au moyen d'une détection d'un bruit de corps ou d'un bruit de l'air dans le système (1) de vannes.

5. Système (1) de vannes suivant l'une des revendications précédentes, dans lequel le système (12) de diagnostic a une unité (18) tampon pour le tampon d'énergie électrique de l'énergie électrique nécessaire à l'unité (13a, 13b) de relevé de la pression et, de préférence à l'unité (15a, 15b) de relevé du son.

6. Système (1) de vannes suivant l'une des revendications précédentes, dans lequel le système (12) de diagnostic a une unité (21, 22) de mise en mémoire pour la mise en mémoire des données de la courbe de la pression ou de la courbe du son dans l'entraînement (3) pneumatique, l'unité (21, 22) de mise en mémoire étant constituée, de préférence, pour la mise en mémoire des données sans alimentation d'énergie.

7. Système (1) de vannes suivant la revendication 6, dans lequel le système (12) de diagnostic a une unité (23) d'émission pour l'émission décalée dans le temps des données mises auparavant en mémoire dans l'unité (21, 22) de mise en mémoire, notamment au moyen d'une unité de communication par fil ou sans fil.

8. Système (1) de vannes suivant l'une des revendications précédentes, dans lequel le système (12) de diagnostic a un capteur (28) de parcours pour le relevé d'une position de l'entraînement (3) pneumatique de la vanne (2).

9. Système (1) de vannes suivant l'une des revendications précédentes, dans lequel le système (12) de diagnostic a un capteur de son pour le relevé d'un bruit de corps ou d'un bruit de l'air dans la vanne (2).

10. Procédé de relevé d'un état d'entretien d'un système (1) de vannes suivant la revendication 1, monté dans une installation industrielle, que l'on entraîne au moyen d'un entraînement (3) pneumatique,
**caractérisé en ce que**
l'on utilise le système (12) de diagnostic pour relever une courbe de la pression de l'entraînement (3) pneumatique de la vanne (2) et, de préférence, en outre, une courbe du son dans le système (1) de vannes, lors d'une opération de fermeture ou d'une opération d'ouverture de la vanne (2).

11. Procédé suivant la revendication 10,
dans lequel on utilise le système (12) de diagnostic pour effectuer un relevé du parcours de l'entraînement (3) pneumatique de la vanne (2).

12. Procédé suivant la revendication 10 ou 11,
dans lequel on utilise le système (12) de diagnostic pour effectuer un relevé d'un bruit de corps ou d'un bruit de l'air dans le système (1) de vannes.

13. Procédé suivant l'une des revendications 10 à 12,
dans lequel on exploite une variation de la pente de la courbe de la pression de l'entraînement (3) pneumatique et/ou une position de l'entraînement (3) pneumatique et/ou une caractéristique de fréquence du bruit de corps ou du bruit de l'air dans le système (1) de vannes pour évaluer des grandeurs caractéristiques critiques pour le système (1) de vannes.

14. Procédé suivant l'une des revendications 10 à 13,
dans lequel on extrapole dans le temps la courbe de la pression de l'entraînement (3) pneumatique et/ou une position de l'entraînement (3) pneumatique et/ou une caractéristique de fréquence du bruit de corps ou du bruit de l'air dans le système (1) de vannes pour prédire une probabilité de défaillance du système (1) de vannes.
